(19) **Europäisches Patentamt European Patent Office Office européen des brevets**

(11) **EP 4 266 134 B1**

(12) **EUROPEAN PATENT SPECIFICATION**

(45) Date of publication and mention
of the grant of the patent:
**09.07.2025 Bulletin 2025/28**

(21) Application number: **23167995.2**

(22) Date of filing: **14.04.2023**

(51) International Patent Classification (IPC):
**G05B 13/02** $^{(2006.01)}$ **G05B 15/02** $^{(2006.01)}$

(52) Cooperative Patent Classification (CPC):
**G05B 13/0265; G05B 15/02;** G05B 13/027;
G05B 2219/2642; G06N 20/00

(54) **A COMPUTER-IMPLEMENTED METHOD FOR TRAINING A MACHINE LEARNING SYSTEM TO PREDICT THE THERMAL POWER SUPPLIED BY A HEAT GENERATOR LOCATED IN A PREDEFINED ENVIRONMENT**

EINE COMPUTERIMPLEMENTIERTE METHODE ZUM TRAINIEREN EINES MASCHINELLEN LERNSYSTEMS ZUR VORHERSAGE DER THERMISCHEN LEISTUNG, DIE VON EINEM WÄRMEERZEUGER IN EINER VORDEFINIERTEN UMGEBUNG GELIEFERT WIRD

PROCEDE INFORMATIQUE D'ENTRAINEMENT D'UN SYSTEME D'APPRENTISSAGE MACHINE POUR PREVOIR LA PUISSANCE THERMIQUE FOURNIE PAR UN GENERATEUR DE CHALEUR SITUE DANS UN ENVIRONNEMENT PREDEFINI

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.04.2022 IT 202200007970**

(43) Date of publication of application:
**25.10.2023 Bulletin 2023/43**

(73) Proprietor: **Immergas S.p.A.**
**42041 Brescello (Reggio Emilia) (IT)**

(72) Inventors:
• **TESTI, Daniele**
**55041 Camaiore (Lucca) (IT)**
• **SCHITO, Eva**
**56126 Pisa (IT)**
• **CONTI, Paolo**
**56122 Pisa (IT)**
• **DELLA VISTA, Davide**
**56021 Cascina (Pisa) (IT)**
• **ZAMBRELLI, Cristian**
**43124 Parma (IT)**
• **BRONZONI, Cristiana**
**42021 Bibbiano (Reggio Emilia) (IT)**

(74) Representative: **Dondi, Silvia**
**Bugnion S.p.A.**
**Largo Michele Novaro, 1/A**
**43121 Parma (IT)**

(56) References cited:
**US-A1- 2019 041 811    US-A1- 2020 356 087**
**US-A1- 2021 373 519**

• **AHMED SHAMS FORRUQUE ET AL: "Data-driven modelling techniques for earth-air heat exchangers to reduce energy consumption in buildings: a review", ENVIRONMENTAL CHEMISTRY LETTERS, SPRINGER INTERNATIONAL PUBLISHING, CHAM, vol. 19, no. 6, 30 August 2021 (2021-08-30), pages 4191 - 4210, XP037598223, ISSN: 1610-3653, [retrieved on 20210830], DOI: 10.1007/S10311-021-01288-7**

**Description**

The present invention relates to a computer-implemented method for training a machine learning system to predict the thermal power supplied by a heat generator located in a predefined environment.

The invention finds application in the heating and cooling services of buildings, in particular using water emission terminals (e.g. radiators for heating, fancoils and radiant panels for heating and cooling).

Thermoregulation systems inside buildings are classified in the European Commission Communication 2014/C 207/02.

In particular, the systems belonging to classes V, VI and VIII indicated therein are defined as "advanced".

On the market there are thermal plants that implement integrated control and regulation systems based on standard values, that is, not on the real needs of the environment (open-loop control).

It is also known, from document EP 3211340 A1, an electronic device for regulating thermo-fluidic plants at the service of buildings, capable of implementing a closed-loop regulation of the mixing valves downstream of the plant generation system.

From document WO 2021/064628 A1 it is also known a device for the regulation of a heating and/or cooling plant, which allows to reduce energy consumption.

In general, the known systems and methods are based on subsequent approximation logics starting from climate correlation curves between the external temperature and the desired temperature on the plant, which however does not always coincide with that required from the generator.

These solutions therefore do not take into account the performance of the generation plant, which may vary according to the actual operating conditions (e.g. delivery temperature, load factor, etc.).

From document US 2019/0041811 A1 it is known a system for controlling heating, ventilation and conditioning of a building based on *deep learning* and using a combination of a neural network model and regression model.

In this context, the technical task underlying the present invention is to propose a computer-implemented method for training a machine learning system to predict the thermal power supplied by a heat generator located in a predefined environment, which overcomes the drawbacks of the above-mentioned prior art.

In particular, the aim of the present invention is to provide a computer-implemented method for training a machine learning system to predict the thermal power supplied by a heat generator located in a predefined environment, which takes into account the overall performance of the generation plant.

Another aim of the present invention is to propose a computer-implemented method for training a machine learning system to predict the thermal power supplied by a heat generator located in a predefined environment, which allows the trained system to be used to determine the optimal setting of the generator, in terms of energy efficiency, to enslave the plant.

The specified technical task and the specified purposes are substantially achieved by a computer-implemented method for training a machine learning system to predict the thermal power supplied by a heat generator located in a predefined environment, in particular a building, comprising the steps of:

- detecting a set of temperature values of the air of the predefined environment;
- detecting a set of delivery temperature values of a heat transfer fluid from the heat generator;
- calculating hourly average values on the set of temperature values of the air of the predefined environment and on the set of delivery temperature values of the heat transfer fluid;
- calculating values of hourly average power supplied by the heat generator;
- applying a linear regression model to the calculated average power values so as to identify linear regression coefficients;
- applying a non-linear regression model to the average hourly values of the temperature of the air of the predefined environment, to the average hourly values of the delivery temperature of the heat transfer fluid, and to the calculated average power values so as to obtain non-linear regression coefficients representative of the link between the average hourly values of the temperature of the air of the predefined environment, the average hourly values of the delivery temperature of the heat transfer fluid, and the average power values.

In particular, the heat generator is selected from one of the following:

- condensing boiler;
- heat pump;
- hybrid system comprising a condensing boiler and a heat pump.

In accordance with one aspect of the invention, the method further comprises a step of detecting return temperature values of the heat transfer fluid to the heat generator.

In accordance with an aspect of the invention, the method further comprises a step of detecting a set of air flow rate values to a fan of the heat generator.

In accordance with one aspect of the invention, the method further comprises a step of detecting a set of flow rate values of the heat transfer fluid.

In accordance with an aspect of the invention, the method further comprises a step of detecting a set of temperature values of the air outside the predefined environment.

In accordance with an aspect of the invention, the method further comprises a step of detecting a set of relative humidity values of the air of the predefined environment.

In accordance with an aspect of the invention, the method further comprises a step of detecting a set of relative humidity values of the air outside the predefined environment.

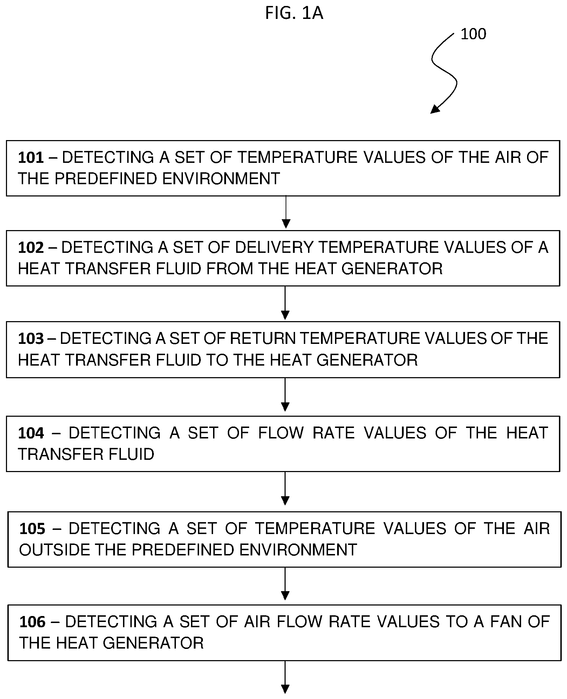

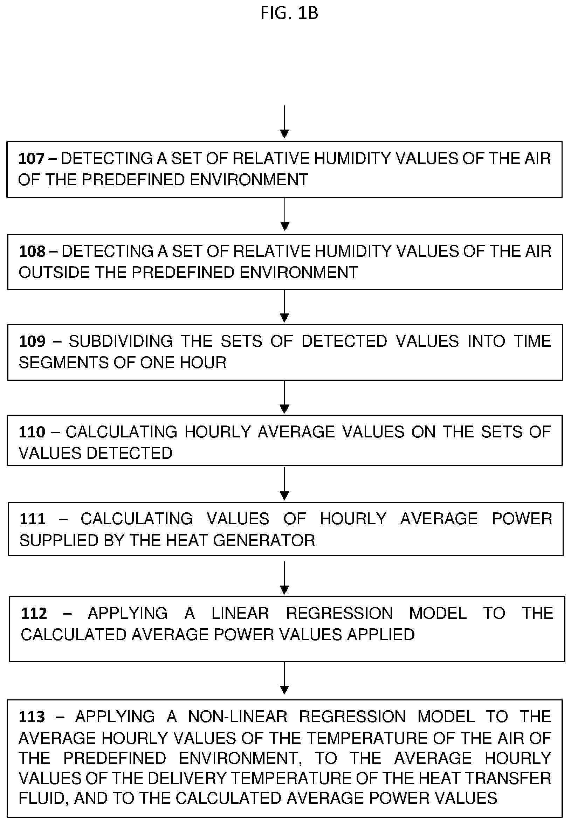

Further characteristics and advantages of the present invention will become more apparent from the indicative and thus non-limiting description of a preferred but non-exclusive embodiment of a computer-implemented method for training a machine learning system to predict the thermal power supplied by a heat generator located in a predefined environment, as illustrated in Figures 1A-1B, relative to a flowchart of the method, in accordance with an embodiment.

The number 100 indicates a method for training a machine learning system to predict the thermal power of a heat generator located in a predefined environment.

In this context, "heat generator" means one of the following devices:

- condensing boiler;
- heat pump (in heating or cooling mode);
- hybrid system.

In the field, the term "hybrid system" means a heating system comprising a condensing boiler and a heat pump.

The method 100 is also applicable to a heat generator integrated to solar thermal panels, photovoltaic panels, thermal accumulations and electrical accumulations.

The steps of the method 100 are indicated below. The order of enunciation is not necessarily the chronological order in which these steps are performed.

The method 100 comprises at least two detection steps, which are as follows:

- detecting a set of temperature values of the air of the predefined environment (step indicated with number 101);
- detecting a set of delivery temperature values of a heat transfer fluid from the heat generator (step indicated with the number 102).

In accordance with one embodiment, step 101 and step 102 may be simultaneous or partially overlapping.

The detections of the values of the ambient air temperature and of the heat transfer fluid delivery temperature from the heat generator are common for all types of heat generator.

The method 100 may further comprise detecting other variables.

In particular, the choice of the variables to be monitored may depend on the type of heat generator and/or the mode of operation (heating or cooling).

For example, it is envisaged monitoring additional variables or parameters which serve to understand whether, in the period of time considered, the heat generator is operating for the heating service or for domestic hot water service. As will be seen below, this monitoring is useful for the Machine Learning system.

In addition, for a given heat generator there is a greater number of variables to be monitored (in addition to the essential ones indicated above) in order to increase the accuracy.

In accordance with one aspect of the invention, the method 100 further comprises a step of detecting a set of return temperature values of the heat transfer fluid to the heat generator (step indicated with the number 103).

The detection of the return temperature values to the heat generator is applicable to all types of heat generator.

In accordance with one aspect of the invention, the method 100 further comprises a step of detecting a set of flow rate values of the heat transfer fluid (step indicated by numeral 104).

The detection of the flow rate values of the heat transfer fluid is applicable to all types of heat generator.

In accordance with an aspect of the invention, the method 100 further comprises a step of detecting a set of temperature values of the air outside the predefined environment (step indicated by the numeral 105).

The detection of the temperature values of the outdoor air is applicable to all types of heat generators.

In accordance with an embodiment of the method, applied to a condensing boiler, the method 100 comprises a step of detecting a set of air flow rate values to a fan of the condensing boiler. This step is indicated by the number 106.

In a condensing boiler, the detection of the air flow rate values to the fan can be an alternative to the detection of the return temperature values to the heat generator.

In other words, step 106 may be alternative to step 103.

In accordance with an embodiment variant, the method 100 applied to a condensing boiler may envisage both step 106 and step 103.

In this case a redundancy is achieved which makes the method more robust as well as more accurate.

In accordance with an embodiment of the method, applied to a heat pump in cooling mode, the method 100 further comprises a step of detecting a set of relative humidity values of the air of the predefined environment. This step is indicated by the number 107.

In accordance with an embodiment of the method, applied to a heat pump in cooling mode, the method 100 further comprises a step of detecting a set of relative humidity values of the air outside the predefined environment. This step is indicated by the number 108.

The above indicated values are detected by means of a plurality of sensors of known type.

In accordance with one embodiment, the values are detected continuously, with a predefined time pitch, for example equal to 1 second.

The sets of values detected (both those essential and those optional, in the various applications mentioned above) are subdivided into time segments of predefined duration (step indicated with the number 109), in particular of one hour.

For each variable detected, hourly average values are calculated on the set of values detected (step indicated with the number 110).

For example, in the minimum configuration, the following averages are calculated:

- hourly averages of the temperature of the ambient air;
- hourly averages of the delivery temperature of the heat transfer fluid.

In other embodiments, the method 100 further envisages calculating the following averages (one or more):

- hourly averages of the return temperature of the heat transfer fluid;
- hourly averages of the air flow rate to the fan;
- hourly averages of the flow rate of the heat transfer fluid;
- hourly averages of the temperature of the outdoor air;
- hourly averages of the relative humidity of the ambient air;
- hourly averages of the relative humidity of the outdoor air.

In addition, values of the average hourly power Q supplied by the heat generator are calculated (step indicated with the number 111).

The above indicated time subdivisions and calculations are performed by a computer and stored in a memory.

At this point, the method 100 comprises applying two different Machine Learning algorithms (hereinafter briefly referred to by the acronym "ML") to the above calculated average values.

In particular, the average power values are regressed to the least squares (step indicated with the number 112) in such a way as to identify the values of the coefficients of a linear model approximating the average power values.

A non-linear regression model is instead applied to the average hourly values of the temperature of the air of the predefined environment, to the average hourly values of the delivery temperature of the heat transfer fluid, and to the calculated average power values so as to obtain non-linear regression coefficients representative of the link between the average hourly values of the temperature of the air of the predefined environment, the average hourly values of the delivery temperature of the heat transfer fluid, and the average power values.

This step is indicated by the number 113.

For example, for non-linear regression a "logarithmic least squares" approach, of known type, is used.

In an embodiment variant, the prediction of the delivery temperature to the generator is carried out with an autoregressive model. The application of the ML algorithms can be done either by sending the data to a remote server or to local computers, given the limited computing power required.

The linear coefficients are used to predict the thermal power values.

The non-linear regressive coefficients allow instead to predict the link between the variables to which the algorithm has been applied, so as to choose the delivery temperature at which to set the generator.

It should be noted that in this context the terms "algorithm" and "model" are used synonymously.

In this context, the linear regression model and the non-linear regression model together constitute an "ML system".

Once the ML system has been trained it can be used make predictions (inference time).

In particular, predictions of the thermal power required for the subsequent hour are made using linear coefficients.

With regards instead to the most suitable delivery temperature with which to satisfy the average thermal load predicted for the subsequent hour, it is possible to predict it starting from the temperature values of the ambient air and the just predicted value of thermal power.

These two values are used as input for the non-linear regressive model. The third magnitude of which the prediction is wished to be obtained, namely the delivery temperature, is in fact obtained therefrom.

Similarly, predictions can be made that also take into account other variables, increasing the reliability and the precision of the prediction.

In accordance with an embodiment, as already mentioned above, the monitoring of additional variables or parameters is envisaged which serve to understand whether, in the period of time considered, the heat generator is operating for the heating service or for the domestic hot water service.

This discrimination serves to separate the data relating to the operation for the heating service from the data relating to other operating modes (e.g. domestic hot water, alarm). Only the data relating to the operation for the heating service are used by the ML system both for training and during the inference time.

For example, the status of a three-way valve has been used as an additional parameter to be monitored, which indicates whether the boiler is currently switched on to supply the domestic hot water service or the heating service. By also monitoring this parameter it is possible to take advantage of the data relating only to the operation of the generator being heated, thus discarding all the time intervals in which the boiler has been switched on for another service both from the training and application step (inference time).

In accordance with an embodiment, data coming from a zone thermostat can also be collected, together with the preparation times for switching on the generator for heating. In this case, the prediction is made only if the zone thermostat is actually set to switch on in the time slot considered.

For example, if the possibility of heating every day from 9:00 am to 6:00 pm is envisaged, the predictive model will be used at exactly the same times, and not outside of them.

In addition, during normal use of the ML system it is possible to update the models.

In particular, with regard to the linear regression model, the values of the linear coefficients are updated.

Similarly, as regards the non-linear regression model, the regressive non-linear coefficients are periodically updated.

This increases the accuracy of the predictions.

If the building has multiple heat generators, the prediction of the delivery temperature obtained by the method can be used to select the most convenient generator to be activated in the subsequent hour.

In accordance with one aspect of the invention, the prediction model also uses exogenous data such as solar radiation and time of day (in addition to outside temperature).

Other exogenous data that can be used are: global solar irradiance, external relative humidity, time of day, plant ignition triggers. These parameters, monitored with acquisition periods that are even shorter than one hour but still averaged on an hourly basis, are always used for the training and the prediction of the thermal power through a predictive algorithm. This is based both on the autoregression of the thermal power values themselves and on the monitored values of these exogenous parameters (ARX model).

The model then becomes:

$$Q_{t+1} = \sum_{i=1}^{n} \phi_i Q_{t-n+i} + \sum_{i=1}^{n_X} \phi_{Xi} X_{t-n_X+i}$$

Where X represents the generic exogenous data to be used in the model.

In an embodiment variant, a calculation is also envisaged to verify the randomness of the heating requests during the training period, to understand if the application of the prediction and control methodology can actually bring positive results.

In fact, by analysing the experimental data, it was realized that the thermal power data coming from monitoring can be influenced by an "abnormal" load of the building-plant system, caused for example by a very intermittent behaviour of the boiler, originated by an oversizing of the same or by the actions of the user.

For this reason, it is advantageous to introduce a data quality assessment metric, verifying whether behaviours such as almost random trend of the data, presence/absence of repetitiveness, high measurement noise are recorded during monitoring.

The evaluation step may therefore involve the calculation of one or more of the following indicators:

- the deviation of the hourly thermal power data from its trend calculated with the three-hour moving average of the data;
- the Wald-Wolfowitz test index, which determines, in a range from 0 to 1, how much the monitoring sequence can be attributed to a random sequence of numbers;
- the signal-to-noise ratio, a parameter used in signal analysis to quantify the noise;
- the partial autocorrelation function, which evaluates the possible correlation between a value of the time series and those of the previous observations.

If the values of these indicators fall outside the range of goodness (index that the load of the building is therefore abnormal), then the predictive model is not applied on the generator.

From the description provided the characteristics of the computer-implemented method for training a machine learning system to predict the thermal power supplied by a heat generator located in a predefined environment, according to the present invention, are clear, as are the advantages.

In particular, the method devised allows the thermal load to be predicted taking into account the overall performance of the heat generator.

In addition, the method allows to determine the optimal setting of the generator, in terms of energy efficiency, to enslave the plant.

In particular, the heat generator can be exploited with greater efficiency thanks to the knowledge of the load profile required at the subsequent hour, thus allowing to manage the switching on and the modulation of the most efficient generator among those available, possibly also regulating the charge and discharge of the installed thermal and electrochemical accumulations and the use of renewable energy sources, reducing the amount of primary energy required and the associated costs.

An example of application is the possibility of determining the most suitable delivery temperature at which to send the heat transfer fluid to the terminals: by correctly choosing this parameter, the load required by the building is satisfied at all times and at the same time the generator is made to work at high efficiencies, improving its performance and avoiding unwanted on-off operating cycles.

## Claims

1. A computer-implemented method (100) for training a machine learning system to predict the thermal power supplied by a heat generator located in a predefined environment, particularly in a building, the method (100) comprising the following steps:

   - detecting a set of temperature values of the air of the predefined environment (101);
   - detecting a set of delivery temperature values of a heat transfer fluid from the heat generator (102);
   - detecting return temperature values of the heat transfer fluid to the heat generator (103);
   - calculating hourly average values on the set of temperature values of the air of the predefined environment, on the set of delivery temperature values of the heat transfer fluid and on the return temperature values of the heat transfer fluid (110);
   - calculating values of hourly average power supplied by the heat generator (111);
   - applying a linear regression model (112) to the calculated average power values so as to identify linear regression coefficients;
   - applying a non-linear regression model (113) to the average hourly values of the temperature of the air of the predefined environment, to the average hourly values of the delivery temperature of the heat transfer fluid, and to the calculated average power values so as to obtain non-linear regression coefficients representative of the link between the average hourly values of the temperature of the air of the predefined environment, the average hourly values of the delivery temperature of the heat transfer fluid, and the average power values.

2. The method (100) according to claim 1, further comprising a step of detecting a set of air flow rate values to a fan of the heat generator (106).

3. The method (100) according to any one of the preceding claims, further comprising a step of detecting a set of flow rate values of the heat transfer fluid (104).

4. The method (100) according to any one of the preceding claims, further comprising a step of detecting a set of temperature values of the air outside the predefined environment (105).

5. The method (100) according to any one of the preceding claims, further comprising a step of detecting a set of relative humidity values of the air of the predefined environment (107).

6. The method (100) according to any one of the preceding claims, further comprising a step of detecting a set of relative humidity values of the air outside the predefined environment (108).

7. The method (100) according to any one of the preceding claims, wherein the heat generator (1) is selected from one of the following:

   - condensing boiler;
   - heat pump;
   - hybrid system comprising a condensing boiler and a heat pump.

8. A software product that can be loaded into the memory of an electronic device, said software product comprising instructions that, when run by the electronic device, results in the performance of the steps of the method according to any one of claims 1 to 7.

## Patentansprüche

1. Computerimplementierte Methode (100) zum Trainieren eines maschinellen Lernsystems zur Vorhersage der thermischen Leistung, die von einem Wärmeerzeuger in einer vordefinierten Umgebung, insbesondere in einem Gebäude, geliefert wird, wobei die Methode (100) die folgenden Schritte umfasst:

   - Erfassen eines Satzes von Temperaturwerten der Luft der vordefinierten Umgebung (101);
   - Erfassen eines Satzes von Abgabetemperaturwerten eines Wärmeübertragungsfluids von dem Wärmeerzeuger (102);
   - Erfassen von Rücklauftemperaturwerten des Wärmeübertragungsfluids zu dem Wärmeerzeuger (103);
   - Berechnen von Stundenmittelwerten auf dem Satz von Temperaturwerten der Luft der vordefinierten Umgebung, auf dem Satz von Abgabetemperaturwerten des Wärmeübertragungsfluids und auf den Rücklauftemperaturwerten des Wärmeübertragungsfluids (110);
   - Berechnen von Werten der von dem Wärmeerzeuger (111) gelieferten Stundenmittelleistung;
   - Anwenden eines linearen Regressionsmodells (112) auf die berechneten durchschnittlichen Leistungswerte, um lineare Regressionskoeffizienten zu identifizieren;
   - Anwenden eines nichtlinearen Regressionsmodells (113) auf die durchschnittlichen Stundenwerte der Temperatur der Luft der vordefinierten Umgebung, auf die durchschnittlichen Stundenwerte der Abgabetemperatur des Wärmeübertragungsfluids und auf die berechneten durchschnittlichen Leistungswerte, um nichtlineare Regressionskoeffizienten zu erhalten, die für die Verknüpfung zwischen den durchschnittlichen Stundenwerten der Temperatur der Luft der vordefinierten Umgebung, den durchschnittlichen Stundenwerten der Abgabetemperatur des Wärmeübertragungsfluids und den durchschnittlichen Leistungswerten repräsentativ sind.

2. Methode (100) nach Anspruch 1, ferner umfassend einen Schritt zum Erfassen eines Satzes von Luftstromratenwerten zu einem Lüfter des Wärmeerzeugers (106).

3. Methode (100) nach einem der vorhergehenden Ansprüche, ferner umfassend einen Schritt zum Erfassen eines Satzes von Stromratenwerten des Wärmeübertragungsfluids (104).

4. Methode (100) nach einem der vorhergehenden Ansprüche, ferner umfassend einen Schritt zum Erfassen eines Satzes von Temperaturwerten der Luft außerhalb der vordefinierten Umgebung (105).

5. Methode (100) nach einem der vorhergehenden Ansprüche, ferner umfassend einen Schritt zum Erfassen eines Satzes von Relativfeuchtigkeitswerten der Luft der vordefinierten Umgebung (107).

6. Methode (100) nach einem der vorhergehenden Ansprüche, ferner umfassend einen Schritt zum Erfassen eines Satzes von Relativfeuchtigkeitswerten der Luft außerhalb der vordefinierten Umgebung (108).

7. Methode (100) nach einem der vorhergehenden Ansprüche, wobei der Wärmeerzeuger (1) aus einem der folgenden ausgewählt ist:

   - Brennwertkessel;
   - Wärmepumpe;
   - Hybridsystem, umfassend einen Brennwertkessel und eine Wärmepumpe.

8. Softwareprodukt, das in den Speicher einer elektronischen Vorrichtung geladen werden kann, wobei das Softwareprodukt Anweisungen umfasst, die bei Ausführung durch die elektronische Vorrichtung zur Durchführung der Schritte der Methode nach einem der Ansprüche 1 bis 7 führen.

## Revendications

1. Procédé (100) informatique d'entraînement d'un système d'apprentissage machine pour prévoir la puissance thermique fournie par un générateur de chaleur situé dans un environnement prédéfini, en particulier dans un bâtiment, le procédé (100) comprenant les étapes suivantes :

   - détecter un ensemble de valeurs de température de l'air de l'environnement prédéfini (101) ;
   - détecter un ensemble de valeurs de température de distribution d'un fluide caloporteur provenant du générateur de chaleur (102) ;
   - détecter des valeurs de température de retour du fluide caloporteur vers le générateur de chaleur (103) ;
   - calculer des valeurs moyennes horaires sur l'ensemble des valeurs de température de l'air de l'environnement prédéfini, sur l'ensemble des valeurs de température de distribution du fluide caloporteur et sur les valeurs de température de retour du fluide caloporteur (110) ;
   - calculer des valeurs de puissances moyennes horaires fournies par le générateur de chaleur (111) ;
   - appliquer un modèle de régression linéaire (112) aux valeurs de puissances moyennes calculées afin d'identifier des coefficients de régression linéaire ;
   - appliquer un modèle de régression non linéaire (113) aux valeurs horaires moyennes de la température de l'air de l'environnement prédéfini, aux valeurs horaires moyennes de la température de distribution du fluide caloporteur et aux valeurs de puissances moyennes calculées afin d'obtenir des coefficients de régression non linéaire représentatifs du lien entre les valeurs horaires moyennes de la température de l'air de l'environnement prédéfini, les valeurs horaires moyennes de la température de distribution du fluide caloporteur et les valeurs de puissances moyennes.

2. Procédé (100) selon la revendication 1, comprenant en outre une étape de détection d'un ensemble de valeurs de débit d'air vers un ventilateur du générateur de chaleur (106).

3. Procédé (100) selon l'une quelconque des revendications précédentes, comprenant en outre une étape de détection d'un ensemble de valeurs de débit du fluide caloporteur (104).

4. Procédé (100) selon l'une quelconque des revendications précédentes, comprenant en outre une étape de détection d'un ensemble de valeurs de température de l'air à l'extérieur de l'environnement prédéfini (105).

5. Procédé (100) selon l'une quelconque des revendications précédentes, comprenant en outre une étape de détection d'un ensemble de valeurs d'humidité relative de l'air de l'environnement prédéfini (107).

**6.** Procédé (100) selon l'une quelconque des revendications précédentes, comprenant en outre une étape de détection d'un ensemble de valeurs d'humidité relative de l'air à l'extérieur de l'environnement prédéfini (108).

**7.** Procédé (100) selon l'une quelconque des revendications précédentes, dans lequel le générateur de chaleur (1) est choisi parmi l'un des éléments suivants :

- une chaudière à condensation ;
- une pompe à chaleur ;
- un système hybride comprenant une chaudière à condensation et une pompe à chaleur.

**8.** Progiciel pouvant être chargé dans la mémoire d'un dispositif électronique, ledit progiciel comprenant des instructions qui, lorsqu'elles sont exécutées par le dispositif électronique, entraînent l'exécution des étapes du procédé selon l'une quelconque des revendications 1 à 7.

FIG. 1A

100

**101** – DETECTING A SET OF TEMPERATURE VALUES OF THE AIR OF THE PREDEFINED ENVIRONMENT

**102** – DETECTING A SET OF DELIVERY TEMPERATURE VALUES OF A HEAT TRANSFER FLUID FROM THE HEAT GENERATOR

**103** – DETECTING A SET OF RETURN TEMPERATURE VALUES OF THE HEAT TRANSFER FLUID TO THE HEAT GENERATOR

**104** – DETECTING A SET OF FLOW RATE VALUES OF THE HEAT TRANSFER FLUID

**105** – DETECTING A SET OF TEMPERATURE VALUES OF THE AIR OUTSIDE THE PREDEFINED ENVIRONMENT

**106** – DETECTING A SET OF AIR FLOW RATE VALUES TO A FAN OF THE HEAT GENERATOR

FIG. 1B

**107** – DETECTING A SET OF RELATIVE HUMIDITY VALUES OF THE AIR OF THE PREDEFINED ENVIRONMENT

**108** – DETECTING A SET OF RELATIVE HUMIDITY VALUES OF THE AIR OUTSIDE THE PREDEFINED ENVIRONMENT

**109** – SUBDIVIDING THE SETS OF DETECTED VALUES INTO TIME SEGMENTS OF ONE HOUR

**110** – CALCULATING HOURLY AVERAGE VALUES ON THE SETS OF VALUES DETECTED

**111** – CALCULATING VALUES OF HOURLY AVERAGE POWER SUPPLIED BY THE HEAT GENERATOR

**112** – APPLYING A LINEAR REGRESSION MODEL TO THE CALCULATED AVERAGE POWER VALUES APPLIED

**113** – APPLYING A NON-LINEAR REGRESSION MODEL TO THE AVERAGE HOURLY VALUES OF THE TEMPERATURE OF THE AIR OF THE PREDEFINED ENVIRONMENT, TO THE AVERAGE HOURLY VALUES OF THE DELIVERY TEMPERATURE OF THE HEAT TRANSFER FLUID, AND TO THE CALCULATED AVERAGE POWER VALUES

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3211340 A1
- WO 2021064628 A1
- US 20190041811 A1